# EUROPEAN PATENT APPLICATION

(11) **EP 4 834 119 A1**
(43) Date of publication of application: **04.11.2026**
(21) Application number: 26166345.4
(22) Date of filing: 20.03.2026
(51) Int. Cl.: A23B 2/80, A23B 7/04, A23B 9/10, A23B 99/00, A23L 19/00, A23L 23/00, F25D 3/11, F25D 13/06, A23L 7/196

(54) **METHOD FOR FREEZING A FOOD**

(30) Priority: 28.04.2025 IT 202500009342
(71) Applicant: Volentieri Srl, 31053 Pieve di Soligo (TV) (IT)
(72) Inventor: RICCI, LUCA, 31053 Pieve di Soligo (TV) (IT)
(74) Representative: Citron, Massimiliano

(57) **Abstract**

To increase freezing productivity, a method for freezing a food is described, involving the steps of dosing a food in the form of a mush onto a conveyor plate, sprinkling or pouring lumps, patches, or dabs of food onto it, and advancing the mush on the conveyor plate, which is placed inside a freezing environment, while jets of freezing gas, such as air, are emitted from the conveyor plate to cool the food.

## Description

The present invention relates to a method and apparatus for freezing food, in particular IQF freezing.

IQF stands for *Individually Quick Frozen* and refers to the process of freezing food products individually. This process separates the individual ingredients of a food product from one another when they are being frozen: for example, when one opens a package of peas or a vegetable soup, there is not a single block, but rather many vegetables separated from one another.

An IQF freezing apparatus is described for example in WO2017209683.

Solid food particles pass through a refrigerated tunnel on a conveyor plane and are agitated by a jet of cold air coming from holes in the conveyor plane. This method only works if the tunnel speed is slow enough to allow the food particles to freeze evenly as they bounce along the conveyor plane. Furthermore, the food must be able to float on the conveyor plane to advance; otherwise, incoming food will fall on top of it and accumulate, creating a blockage. The maximum hourly throughput then has a virtually invariable maximum.

A method and apparatus would then be needed to increase hourly productivity.

The main object of the invention is to eliminate or mitigate the above-mentioned drawbacks by providing a different method and apparatus of the above-mentioned type.

Another object is to develop a method and apparatus to increase the hourly productivity of an IQF machine.

According to one aspect of the invention, a method for freezing food comprises moving the food through a freezing environment on a conveyor plane from which jets of freezing gas, such as air, are emitted to freeze it uniformly. The food is in the form of a mush and is dosed onto the conveyor plane by spreading or pouring lumps, patches, or dabs of food onto it.

A *mush* here refers to an aggregate, e.g. viscous, a semi-liquid mixture, a cream, or a paste made of a single ingredient or a mixture of ingredients. The mush in particular comprises solid pieces of food.

The method allows the food to be loaded onto the conveyor plane in fractioned form, which advantageously allows for rapid freezing of the food (because the individual lumps are smaller and cool faster), high transit speed on the conveyor plane, and therefore high hourly production. When applied to an existing IQF machine, experimental tests have shown that the method at least doubles its productivity.

In one embodiment the gas is freezing gas and/or recirculated air present in the freezing environment.

In one embodiment, the conveyor plane is comprised in an IQF freezing machine. In one embodiment, as IQF freezing machine we consider here an IQF freezing machine equipped with
- a freezing environment that encloses
   a conveyor plane that is
   adapted to receive and advance a food in the form of mush and
   equipped with surface holes; and
- means for blowing freezing air from the freezing environment through said holes to strike the food passing on the conveyor plane.

In one embodiment, said lumps or patches or dabs have a size of approximately 1 ÷ 10 cm, preferably 2 ÷ 7 cm, and more preferably 2 ÷ 5 cm. These values provide a good compromise between processing speed and final product quality.

In one embodiment, the food is dosed onto the conveyor plane by allowing it to fall by gravity onto the conveyor plane from a certain height above the conveyor plane. This makes it easy to form lumps on the conveyor plane.

In one embodiment, the food is dosed onto the conveyor plane by allowing it to fall by gravity from an opening in the outer casing of an IQF freezing machine, such as the side or top part of the casing. This makes it easy to modify or build an IQF machine to implement the method.

In one embodiment, the food is dosed onto the conveyor plane by allowing it to drip onto the conveyor plane, in particular by allowing it to fall or drip from one or more nozzles placed at a certain height above the conveyor plane.

In one embodiment, the one or more nozzles are the outlets of respective feed ducts that transport the food. Preferably, the feed ducts transport the food from outside the freezing environment to the inside of the freezing environment; more specifically, the feed ducts transport the food from outside the IQF freezing machine to the inside of the freezing environment of the machine itself.

In one embodiment, the food is dosed onto the conveyor plane so as to create and/or distribute a plurality of separate lumps across an area of the conveyor plane. The larger the area of the conveyor plane on which the lumps are formed, the greater the efficiency of the system. For example, the food is dosed onto the conveyor plane so as to create and/or distribute a plurality of lumps across an area equal to at least half of the total conveyor plane area, preferably at least three-quarters of the total conveyor plane area.

In one embodiment, the food is dosed onto the conveyor plane via a plurality of said feed ducts, wherein the outlets of said ducts are distributed in the space above the conveyor plane to cause a plurality of lumps to fall onto the conveyor plane at a plurality of different points.

In one embodiment, the food is dosed onto the conveyor plane pushed by a jet of gas, to prevent it from freezing inside the ducts and clogging them.

In one embodiment, a gas is injected into each of said feed ducts, with the advantage of pushing the mush, improving its dispersion on the conveyor plane and keeping it constantly moving.

In one embodiment one or each feed duct is horizontal.

In one embodiment, one or each feed duct is inclined toward the conveyor plane. This solution is especially advantageous when combined with the air jet because it avoids spraying the food onto the walls of the freezing environment and instead concentrates it toward the conveyor plane.

In one embodiment, said ducts are vacuum-sealed and/or insulated tubes, so the conveyed food does not freeze. In one embodiment, glycol or liquid nitrogen circulates in said ducts.

In one embodiment, a mush stream is fractionated outside the freezing environment into smaller streams which are then sent into the freezing environment to end up on the conveyor plane.

In one embodiment, the mush stream is mixed, preferably in a kneading machine, before fractionation.

In one embodiment, the mush is pumped into the freezing environment toward the conveyor plane. Generally, any pump can be used, especially if one wants to crush the components within the mush. However, if one wants to preserve the particle size of the mush components, it is preferable to pump the food using a positive-displacement pump, preferably a vane-type pump.

In one embodiment the food is risotto, chickpeas, peas, cereals, diced vegetables such as zucchini, sautéed mushrooms (which are mush), thick soup, or a cream.

In one embodiment, said conveyor plane cools the lumps without causing a state transition toward solidification by freezing.

In one embodiment, said lumps are transferred to a second cooling conveyor plane where said state transition occurs.

For example, in the case of sautéed mushrooms, a well-known IQF machine, such as the one in WO2017209683, would be able to freeze them but would only process very few of them per hour because the product is sticky and the cold air cannot lift it from the conveyor plane and move around it to freeze it.

The method advantageously allows for the retrofitting of pre-existing IQF machines.

In one embodiment, a method of retrofitting a pre-existing IQF machine has the steps of installing injectors on the machine to inject a food in the form of a mush onto the conveyor plane, creating lumps or patches or dabs of food on the conveyor plane.

The retrofitting method shares all the variations of the above method for freezing food. Another aspect of the invention is an improved IQF machine comprising:
- a freezing case that encloses
   a conveyor plane that is
      adapted to receive and advance a food and
      equipped with surface holes; and
   means for blowing freezing air from the freezing environment through said holes to strike the food as it passes over the conveyor plane; and
- one or more injectors (means) for injecting a food in the form of a mush onto the conveyor plane by making on the conveyor plane
   lumps or patches or dabs of food.

In one embodiment, the machine comprises means for dosing the food onto the conveyor plane by letting it fall by gravity onto the conveyor plane from a certain height above the conveyor plane.

In one embodiment the machine comprises
an opening in the casing, e.g. the side or top part of the casing, and
means mounted at the opening for dosing the food onto the conveyor plane by letting it fall by gravity.

In one embodiment, the machine comprises one or more nozzles positioned at a certain height above the conveyor plane to dose the food onto the conveyor plane by causing it to drip or fall onto the conveyor plane.

In one embodiment of the machine, said means are configured to dose the food onto the conveyor plane so as to create and/or distribute a plurality of separate lumps on an area of the conveyor plane.

In one embodiment, the machine comprises feed ducts for dosing the food onto the conveyor plane, wherein the outlets of such ducts are distributed in the space above the conveyor plane to cause a plurality of lumps to fall onto the conveyor plane at a plurality of different points.

In one embodiment the machine comprises means for injecting gas into each of said feed ducts.

In one embodiment, said ducts are vacuum-sealed and/or insulated tubes, so that the conveyed food does not freeze. In one embodiment, the machine comprises means for circulating glycol or liquid nitrogen in said ducts.

In one embodiment the machine comprises a second cooling conveyor plane onto which the food transported from the first plane is carried,
the second conveyor plane comprising means for cooling the food until it transitions into a solid state.

The above aspects share the following embodiments:
- said gas is freezing gas and/or recirculated air present in the freezing environment;
- the one or more nozzles are the outlets of respective feed ducts that transport the food.

Preferably, the feed ducts transport the food from outside the freezing environment to
inside the freezing environment. More specifically, the feed ducts transport the food from outside the IQF freezing machine to inside the freezing environment of the machine itself.
- the larger the conveyor plane area on which the lumps are formed, the greater the system's efficiency. For example, the food is dosed onto the conveyor plane so as to create and/or distribute a plurality of lumps on an area equal to at least half of the total conveyor plane area, preferably on an area equal to at least three-quarters of the total conveyor plane area;
- one or each feed duct is horizontal;
- one or each feed duct is inclined toward the conveyor plane. This solution is especially advantageous when combined with the air jet, because it avoids spraying the food onto the walls of the freezing environment and instead concentrates it toward the conveyor plane;
- the food is risotto, chickpeas, peas, cereals, diced vegetables such as courgettes, sautéed mushrooms (which are mush), thick soup, or a cream;
- the outlets of said feed ducts or said nozzles have different distances from the beginning the conveyor plane.

Each of the variants defined above may be implemented alone or in combination with one or each of the others.

The advantages of the invention will be further clarified by preferred embodiments described below with reference to the accompanying drawings, wherein:

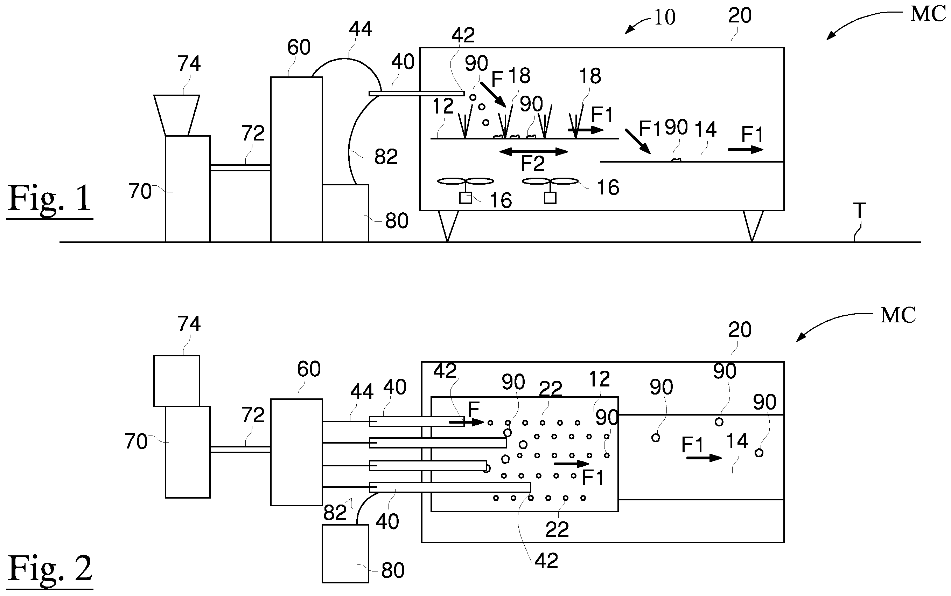

- Figure 1 shows a schematic side view of a freezing apparatus;
- Figure 2 shows a schematic plan view of the freezing apparatus in Fig. 1.

Equal numbers in the figures indicate equal or substantially equal parts. To avoid crowding the drawings, identical elements are sometimes left unnumbered.

In an apparatus MC for freezing food, the food passes through a freezing environment 10 while being agitated by jets of air to make it freeze uniformly and separately.

In one embodiment the freezing environment 10 is an inner tunnel of a casing 20 of an IQF freezing machine (e.g. as in WO2017209683).

The machine comprises a conveyor plane 12 which receives the food to freeze it and deliver it to a second conveyor plane 14. In particular, the conveyor plane 12 oscillates back and forth and/or vibrates to improve the mixing of the food and make it advance towards the second conveyor plane 14.

To involve the entire external surface of the food in the freezing process, the conveyor plane 12 is equipped with holes 22 from which jets 18 of freezing air created by blowers 16 come out. In this way the food travels in leaps along the conveyor plane 12, which for example is located in a freezing environment 10 with a temperature of -30/-40 C°.

According to the invention, the food is in the form of a mush and is dosed onto the conveyor plane 12 by spreading or pouring scattered lumps 90 of food onto it. The lump format reduces the weight of the food masses on the conveyor plane 12 and ensures that the jets 18 can lift and/or tip the food on the conveyor plane 12 for rapidly freezing in and IQF processing it.

In one embodiment, the food is dosed onto the conveyor plane 12 by letting it fall by gravity from a certain height. To this end, in one embodiment, the food is dosed onto the conveyor plane 12 by letting it fall from one or more outlets 42 (e.g. nozzles) located at a certain height with respect to the conveyor plane 12. In particular, the one or more outlets 42 correspond to the outlets of feed ducts 40 that transport the food from outside the freezing environment 10 to the inside of the freezing environment 10.

In this way, the food flow exits the ducts 40 (in its viscous, dense, or semi-liquid form) and continuously falls and covers the conveyor plane 12, even well within such plane. The food arrives on the conveyor plane 12 in the form of lumps, dabs, or small quantities, preferably evenly distributed on the conveyor plane 12. Thanks to this format, each small quantity of food arriving on the conveyor plane 12 is light enough to be swept and stirred by the jets 18.

In one embodiment, the ducts 40 are installed in the casing 20, and each have as an inlet a flow of food arriving from outside the casing 20 and as an outlet the outlets 42.

In one embodiment, the ducts 40 are horizontal or, more preferably, inclined towards the conveyor plane 12 to avoid the formation of accumulations of frozen product at the outlet and improve its spreading on the conveyor plane 12.

In one embodiment, the ducts 40 are vacuum-insulated tubes and/or insulated tubes and/or kept at a controlled temperature, to prevent the food inside the ducts 40 from freezing, especially (also) during machine downtime.

In one embodiment, a gas is injected into the ducts 40 to push the food mush inside the ducts 40. This solution also has the advantage of preventing the food from freezing inside the ducts 40, especially during machine downtime, and/or of creating puffs or splashes of food at the outlets 42 which help to distribute the food randomly but uniformly on the conveyor plane 12.

In one embodiment, the apparatus MC comprises for this purpose a compressor 80 which injects gas, e.g. air, into each duct 40 via a line 82.

In general, the number, cross-section, arrangement and length of the ducts 40 may vary.

For an apparatus MC comprising N ducts 40, N >= 2, in one embodiment each duct 40 receives a fraction of a main flow of food which is divided into N branches. In particular, each duct 40 is fed by a respective line 42 which carries food out of flow-divider means 60, which in turn is fed by a main flow line 72.

Preferably, the outlets 42 of the N ducts 40 are arranged so as to distribute the lumps 90 overall over a significant area of the conveyor plane 12. For example, the outlets 42 have a different distance from the beginning of the conveyor plane 12.

The flow-divider means 60 operates to divide the flow of mush arriving from the line 72 into N smaller flows, each sent to the lines 42.

In one embodiment, the mush is pumped into the line 72 by a pump 70 which draws the mush food from one or more loading hoppers 74 or from another conveying means. There may be one pump for each line 40.

Preferably, the pump 70 is of the positive displacement type, so as not to crash the ingredients of the mush.

In one embodiment, the food is also mixed before entering the freezing environment 10. Preferably for this purpose the flow-divider means 60 also comprises mixing means for amalgamating the food.

### OPERATION

The ducts 40 dose the food to the conveyor plane 12 by gravity. A thread of food exits the nozzles 42 forming a cascade and falling onto the conveyor plane 12 (see arrow F). The food splatters there and forms individual lumps that are struck individually by the jets 18.

The oscillating and/or vibrating movement of the conveyor plane 12 advances the food to the conveyor plane 14 (see arrows F1), where the food arrives well cooled so that the final freezing takes place on such plane 14.

The frozen lumps are then packaged outside the freezing environment 10.

## Claims

1. Method for freezing a food, comprising the steps of
• dosing a food in the form of a pulp onto a conveyor plane by spreading or pouring lumps or patches or dabs of food onto it, and
• advancing the pulp onto the conveyor plane, which plane is placed inside a freezing environment while jets of freezing gas, e.g. air, come out of the conveyor plane to freeze the food.

2. Method according to claim 1, wherein the pulp comprises solid pieces of food.

3. Method according to claim 1 or 2, wherein the conveyor plane is comprised inside an IQF freezing machine.

4. Method according to any preceding claim, wherein the food is dosed onto the conveyor plane by letting it fall by gravity onto the conveyor plane from a certain height with respect to the conveyor plane.

5. Method according to any preceding claim, wherein the food is dosed onto the conveyor plane by dropping it onto the conveyor plane from one or more nozzles placed at a certain height with respect to the conveyor plane,
the one or more nozzles being the outlets of respective supply ducts that transport the food from the outside of the freezing environment to the inside of the freezing environment.

6. Method according to any preceding claim, wherein the food is dosed onto the conveyor plane so as to create and/or distribute a plurality of lumps separated from each other on an area of the conveyor plane.

7. Method according to any preceding claim, wherein the food is dosed onto the conveyor plane pushed by a jet of gas.

8. Method according to claims 7 and 5, wherein a gas is injected into each one of said supply ducts.

9. Method according to any preceding claim, wherein
said conveyor plane cools the lumps without obtaining a transition of state towards solidification by means of freezing, and
said lumps are transferred to a second cooling conveyor plane on which said transition of state occurs.

10. Machine for carrying out the method of any preceding claim, comprising:
- a freezing casing comprising
a conveyor plane which is
adapted to receive and advance a food and
equipped with surface holes; and
- means for blowing freezing air of the freezing environment through said holes to strike the food which travels on the conveyor plane; and
- one or more injectors for injecting a food in the form of a mush onto the conveyor plane, creating lumps or patches or dabs of food on the conveyor plane.
